# EUROPÄISCHE PATENTSCHRIFT

(11) **EP 2 962 909 B1**
(45) Veröffentlichungstag und Bekanntmachung des Hinweises auf die Patenterteilung: **21.02.2018**
(21) Anmeldenummer: 15165403.5
(22) Anmeldetag: 28.04.2015
(51) Int. Cl.: B60R 25/20, B60R 25/25

(54) **VERFAHREN UND VORRICHTUNG ZUR ERKENNUNG EINES FAHRERS EINES FAHRZEUGS**
METHOD AND DEVICE FOR RECOGNISING A DRIVER OF A VEHICLE
PROCÉDÉ ET DISPOSITIF DESTINÉS À LA RECONNAISSANCE D'UN CONDUCTEUR D'UN VÉHICULE

(30) Priorität: 02.07.2014 DE 102014212758
(43) Veröffentlichungstag der Anmeldung: 06.01.2016
(73) Patentinhaber: ROBERT BOSCH GMBH, 70442 Stuttgart (DE)
(72) Erfinder: Fiedler, Thomas, 72116 Moessingen (DE)

(56) Entgegenhaltungen:
- WO-A1-03/084787
- WO-A1-2013/133791
- US-A1- 2012 226 421

## Beschreibung

Die Erfindung betrifft ein Verfahren und eine Vorrichtung zur Identifikation eines Fahrers eines Zweirads.

### Stand der Technik

Um eine unbefugte Benutzung zu verhindern, aber auch um die Nutzung bestimmten Personen zuzuordnen, beispielsweise in Form von personengebundenen Abrechnungen, kann es erforderlich sein, die Identifikation des Nutzers eines Zweirads festzustellen.

Neben der allgemeinen Eingabe einer Nutzer-ID vor Fahrtantritt ist beispielsweise aus der DE 10 2004 062 641 A1 ein System bekannt, bei der eine RFID-Kennung verwendet wird, um die Identifikation des Fahrers durchzuführen. Eine weitere Möglichkeit für die Identifikation besteht darin, biometrische Daten, z.B. ein Abbild eines Körperteils, zu verwenden, wie es beispielsweise die DE 103 21 750 A1 zeigt.

Aus der WO 2009/142920 A1 ist bekannt, dass die Identifikation des Fahrers des Fahrzeugs neben einer Freischaltung des Betriebs auch dazu genutzt werden kann, verschiedene Innen- und Außeneinstellungen des Fahrzeugs auf den Fahrer anzupassen oder verschiedene Komponenten an den Fahrstil des Fahrers anzupassen.

### Offenbarung der Erfindung

Mit der vorliegenden Erfindung wird ein Verfahren sowie eine Vorrichtung beansprucht, die zur Identifikation des Fahrers eines Zweirads dient. Dabei wird sowohl festgestellt, inwieweit der Fahrer zum Führen des berechtigt ist als auch die Möglichkeit geschaffen, Einstellungen des Zweirads an individuelle Nutzer des Zweirads automatisch anzupassen.

Derartige Identifikationen können bei zumindest teilweise mittels Muskelkraft angetriebenen Zweirädern wie Fahrrädern, insbesondere elektrisch antreibbaren Fahrrädern eingesetzt werden.
Die Identifikation des Fahrers, d.h. die Erkennung eines berechtigten Nutzers bzw. einer individuellen Person, die zur Nutzung berechtigt ist, erfolgt zunächst durch eine Erfassung wenigstens einer Betriebsgröße des Zweirads. Anschließend wird das zeitliche Verhalten dieser Betriebsgröße mit entsprechend abgelegten Vergleichsdaten verglichen, um den Fahrer bzw. Nutzer des Zweirads identifizieren zu können. Sollte den erfassten Betriebsgröße über die Vergleichsdaten ein Fahrer zugeordnet werden können, ist vorgesehen, dass ein Identifikationssignal abgegeben wird, z.B. in Form einer positiven Rückmeldung. Falls die Betriebsgrößen jedoch keinen Vergleichsdaten entsprechen, wird entweder kein Identifikationssignal oder eine negative Rückmeldung erzeugt und ggf. ausgegeben.

Durch die Berücksichtigung der Betriebsgrößen des Zweirads kann das Nutzerverhalten während des Betriebs erfasst werden. So kann beispielsweise das Anfahrverhalten, das Beschleunigungsverhalten oder auch das Kurvenverhalten eine individuelle Verhaltensweise aufweisen, die dem Fahrer des Fahrers zugeordnet werden kann. Indem diese Betriebsgrößen mit hinterlegten Nutzerprofilen der entsprechenden Größen verglichen werden, kann der Fahrer identifiziert werden. Diese Identifikation kann weiter dazu benutzt werden, Einstellungen am Zweirad individuell auf den Fahrer anzupassen, ohne dass eine explizite manuelle Einstellung notwendig ist. Darüber hinaus kann diese Identifikation auch zu Abrechnungszwecken, z.B. beim Bikesharing oder als Diebstahlschutz verwendet werden.
Neben einer Betriebsgröße können zusätzlich auch persönliche Parameter des Fahrers erfasst werden, um die Identifikation durchzuführen. So kann beispielsweise ein Fingerabdruck, die Herzfrequenz, das Gewicht oder auch andere biometrische Parameter verwendet werden.
Durch die zusätzliche Erfassung biometrischer Parameter kann in einem ersten Schritt die Freigabe des Zweirads erfolgen, während die Betriebsgrößen unterschiedliche Betriebsmodi des Zweirads einstellen. Weiterhin können die biometrischen Parameter ebenfalls für verschiedene Betriebsmodi herangezogen werden, z.B. eine höhere Unterstützung eines teilweise elektrisch angetriebenen Fahrrads bei Erreichen einer zu hohen Herzfrequenz.
Als typische Betriebsgrößen, die den Betrieb bzw. das Fahrverhalten des Zweirads repräsentieren können durch geeignete Sensoren
- ein Drehmoment, insbesondere einer Tretkurbel oder eines Motors, und/oder
- eine Beschleunigung, insbesondere einer Tretkurbel eines Fahrrads oder des Zweirads, und/oder
- eine Drehfrequenz, insbesondere eines Motors, und/oder
- eine Trittfrequenz einer Tretkurbel eines Fahrrads, und/oder
- eine Neigung des Zweirads, und/oder
- eine Steigung des Zweirads während des Betriebs erfasst und zur Identifikation des Fahrers verwendet wird. Durch die Erfassung wenigstens zweier Betriebsgrößen kann das individuelle Fahrverhalten und somit die Identifikation einer konkreten Person noch schneller und/oder eindeutiger erfolgen.
Eine weitere Möglichkeit, den Fahrer zu identifizieren ist, das örtliche Bewegungsmuster auszuwerten. Hierzu kann zusätzlich ein GPS-Signal erfasst oder erzeugt werden, aus dem die Bewegungsmuster des Zweirads abgeleitet werden. Sollten sich bei diesen Bewegungsmuster anormale Muster ergeben, z.B. indem die Bewegung des Zweirads zu untypischen Zeiten, auf untypischen Strecken und/oder in untypischen Gegenden erfolgt, kann ggf. eine weitere Überprüfung der Identifikation erfolgen oder auch auf einen Diebstahl des Zweirads geschlossen werden.
Die (positive) Identifikation und somit die Erkennung bzw. Zuordnung zu einem bekannten Fahrer kann dazu genutzt werden, bestimmte Komponenten des Zweirads zu aktivieren oder einzustellen. So kann beispielsweise der Antrieb für eine externe Steuerung oder auch ein Bedienungselement freigegeben werden, wenn ein für das Zweirad berechtigter Fahrer erkannt wird. Es ist jedoch auch möglich, dass ein gewisser Grundantrieb für jeden Fahrer zur Verfügung steht, eine normale oder aber auch verbesserte Nutzung jedoch erst nach einer korrekten Identifikation genutzt werden kann. Ähnlich können Bedienungselemente aber auch Komfortfunktionen im oder am Zweirad durch die Identifikation zusätzlich freigeschalten werden.

Im umgekehrten Fall kann die Nutzung von Zweiradkomponenten auch zumindest teilweise deaktiviert oder vollständig blockiert werden, falls die Identifikation fehl schlägt bzw. ein negatives Ergebnis liefert. So kann ggf. der Antrieb eines Elektrofahrrads die Fortbewegung blockieren oder einschränken, wenn nach einiger Zeit erkannt wird, dass der Fahrer nicht authentifiziert ist. Alternativ kann auch das Bedienelement abgeschalten werden, um die Nutzung zu verhindern oder zumindest zu erschweren.
Weitere Vorteile ergeben sich aus der nachfolgenden Beschreibung von Ausführungsbeispielen bzw. aus den abhängigen Patentansprüchen.

### Kurze Beschreibung der Zeichnungen

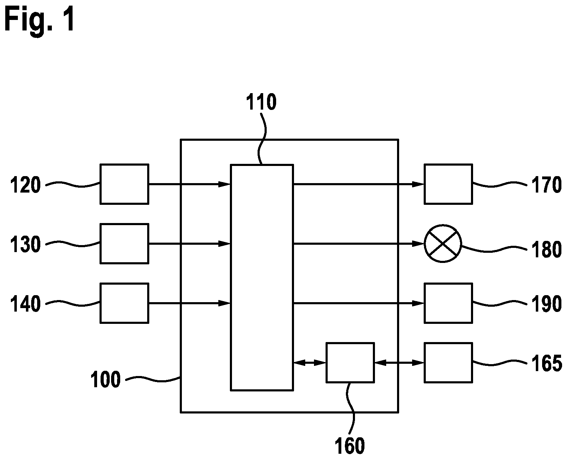

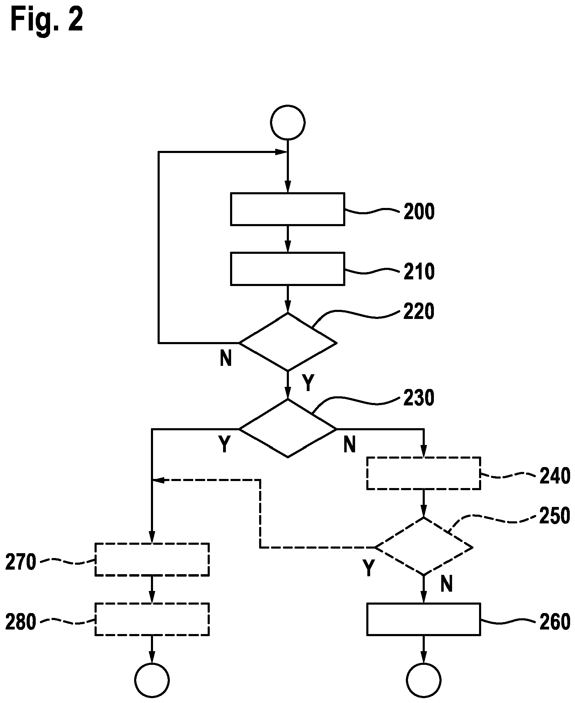

Figur 1 zeigt anhand eines Blockschaltbilds eine erfindungsgemäße Vorrichtung zur Identifikation eines Fahrers eines Zweirads. In der Figur 2 ist ein Flussdiagramm dargestellt, welches ein erfindungsgemäßes Verfahren zur Identifikation beschreibt.

### Ausführungsbeispiel

In den nachfolgenden Ausführungsbeispielen wird die Erfindung anhand des Betriebs eines elektrisch antreibbaren Fahrrads beschrieben. Darüber hinaus ist die Anwendung der Erfindung jedoch auch bei Motorrädern möglich.
Die erfindungsgemäße Vorrichtung 100, wie sie beispielsweise in einem Steuergerät eines Elektrofahrrads realisiert sein kann, weist eine Auswerteeinheit 110 auf, wie sie in der Figur 1 dargestellt ist. Diese Auswerteeinheit 110 erfasst zumindest eine Betriebsgröße des Elektrofahrrads mittels eines geeigneten Sensors 120, 130 und/oder 140 und vergleicht die erhaltenen Größen mit in einem Speicher 160 hinterlegten Fahrerinformationen. Diese Fahrerinformationen stellen Vergleichsdaten und/oder damit verbundene Fahrerprofile dar, die das übliche Verhalten des Fahrers repräsentieren. Über eine Schnittstellen lassen sich diese Vergleichsdaten durch ein externes Modul 165 in den Speicher 160 einlesen oder abfragen. Alternativ oder zusätzlich kann vorgesehen sein, dass die Auswerteeinheit die Betriebsgrößen bei einer eindeutigen Identifikation des Fahrers für spätere Vergleiche bzw. Identifikationen im Speicher 160 ablegt. Denkbar ist hier beispielsweise auch eine Mittelwertbildung bei typischen Betriebssituationen wie Anfahrverhalten oder Kurvenfahrten über mehrere derartig erkannte Fahrsituationen hinweg.
Wird von der Auswerteeinheit 110 der Fahrer eindeutig identifiziert, so kann eine entsprechende Ansteuerung des Motors 170 erfolgen, z.B. indem von einem Grundbetrieb in Form eines reduzierten Motormoments auf eine vollständig nutzbare Motorunterstützung umgeschalten wird. Alternativ oder zusätzlich kann auch das Display 180, das HMI oder die Steuereinheit teilweise oder vollständig freigeschalten werden. Darüber hinaus ist jedoch auch möglich, dass weitere Komponenten 190 des Fahrrads angesteuert werden, z.B. um bestimmte Einstellungen an die erkannte Person anzupassen. Denkbar sind hier beispielsweise die Einstellung bestimmter Sitzpositionen, Anzeigen im HMI (z.B. nutzerindividuelle Anzeigen, Sprachwahl), Dämpferelemente, Lenkerpositionen oder Voreinstellungen für die Schaltgruppe.

Als Betriebsgrößen, die eine individuelle Nutzung des Fahrrads widerspiegeln und somit zur Ableitung der Fahreridentifikation geeignet sind, kann insbesondere ein Drehmomentsensor 120, der beispielsweise das Drehmoment der Tretkurbel oder des verwendeten Motors erfasst, und/oder ein Drehgeschwindigkeitssensor bzw. (Tritt-) Frequenzsensor 130 vorgesehen sein. Gerade der individuelle Tritt in Form des spezifisch erzeugten Drehmoments bzw. Drehgeschwindigkeit der Pedalen kann als Indikator für die Identifikation herangezogen werden, z.B. bei der Erfassung eines typischen Wiegetritts. Darüber hinaus können jedoch mit geeigneten Sensoren 140 weitere Betriebs- oder Situationsgrößen sowie zusätzlich biometrische Parameter des Fahrers erfasst werden. Als Beispiel seien für die Betriebsgrößen die Beschleunigung des Fahrrads oder der Pedalen, die Geschwindigkeit, die Neigung des Fahrrads oder die Steigung des Fahrzeugs in einer vorgegebenen Zeit bzw. bei einer erfassten Geschwindigkeit genannt. Als Situationsgröße könnten mittels eines geeigneten Sensors die GPS-Signale während des Betriebs erfasst werden. Darüber hinaus ist auch die Erfassung und Berücksichtigung der Höhe, insbesondere in Verbindung mit anderen Betriebsgrößen möglich, beispielsweise als Höhenprofil oder in Form von Steigungen/Gefällen. Als biometrische Parameter, die zusätzlich zur Identifikation herangezogen werden können, könnten beispielsweise der Fingerabdruck, die Handgeometrie, die Gesichtsgeometrie, die Herzfrequenz, der Griffhaltung (und Kraft) am Lenker, das Gewicht oder die Gewichtsverteilung auf dem Sattel erfasst werden. Für die Erfassung derartiger Parameter können Drucksensoren, z.B. im Sattel oder im Lenker, oder auch Kameras verwendet werden.

Anhand des Flussdiagramms der Figur 2 wird im Folgenden eine mögliche Ausführung des erfindungsgemäßen Identifikationsverfahrens dargestellt. Nach dem Start des Verfahrens, welches beispielsweise in einer Auswerteeinheit 110 ablaufen kann, wird in einem Schritt 200 wenigstens eine Betriebsgröße des Fahrrads erfasst. Zur Verifizierung kann optional vorgesehen sein, dass wenigstens zwei Betriebsgrößen erfasst werden, die unterschiedliche Nutzungsverhalten repräsentieren. Die erfasste Betriebsgröße bzw. die erfassten Betriebsgrößen können optional in einem Speicher 160 abgespeichert werden, z.B. für eine Mittelwertbildung. Im nächsten Schritt 210 wird die wenigstens eine erfasste Betriebsgröße mit den hinterlegten (Vergleichs-)Daten bzw. dem hinterlegten Fahrerprofil verglichen. Dabei kann es sich bei den hinterlegten Daten um Einzeldaten, zeitlich differenzierte Daten oder Mittelwertbildungen handelt.

Sollte im nächsten Schritte 220 festgestellt werden, dass der Vergleich keine eindeutige Identifikation erlaubt, beispielsweise indem noch zu wenige Betriebsgrößen zur Auswertung vorliegen, werden erneut Betriebsgrößen in Schritt 200 erfasst. Es versteht sich von selbst, dass in diesem Fall die gleichen physikalischen Betriebsgrößen erfasst werden.

Wird im Schritt 220 erkannt, dass ausreichende Informationen vorliegen, um eine Aussage über eine Identifikation vorliegen, wird im nachfolgenden Schritt 230 der Vergleich der im Schritt 200 erfassten Betriebsgrößen mit den hinterlegten Vergleichsdaten durchgeführt. Stimmen die erfassten Betriebsgrößen nicht mit den hinterlegten Daten bzw. dem hinterlegten Profil überein, so folgt in einem optionalen Schritt 240 eine Aufforderung an den Fahrer, eine individuelle ID einzugeben, die ebenfalls im Speicher 160 hinterlegt sein kann, um die Benutzung des Fahrers zu authentifizieren. Alternativ kann auch vorgesehen sein, dass zu diesem Zeitpunkt biometrische Parameter des Fahrers automatisch oder manuell abgefragt werden. Wird im nachfolgenden optionalen Schritte 250 erkannt, dass die eingegebene ID korrekt ist oder die biometrischen Daten mit wenigstens einem Nutzprofil übereinstimmen, wird das Verfahren beendet oder mit dem Schritt 270 weiterverfolgt. Für den Fall, dass die Identifikation im Schritt 230 fehl schlägt, die ID nicht korrekt ist oder die biometrischen Parameter mit keinem der hinterlegten Fahrerprofile übereinstimmt, kann in einem weiteren Schritt 260 eine Einschränkung oder eine komplette Blockierung der Nutzung des Fahrrads vorgesehen sein. Bei dieser Einschränkung bzw. Blockierung kann beispielsweise der Antrieb in einen Notbetrieb heruntergeschalten oder komplett abgeschalten werden. Es kann jedoch auch eine Blockierung stattfinden, so dass das Fahrrad auch nicht mehr mit Muskelkraft bewegt werden kann, um einem möglichen Dieb das Weiterfahren unmöglich zu machen oder zumindest das Entwenden zu erschweren. Denkbar ist auch, dass das Fahrrad nur noch mit einer geringen Geschwindigkeit gefahren werden kann oder eine vorgegebene (Rest-)Reichweite aufweist. Weiterhin ist denkbar, dass eine automatische Information an eine vorbestimmte Adresse, z.B. per SMS oder Telefon abgesandt wird.

Wird im Schritt 230 jedoch erkannt, dass das erfasste Fahrverhalten mit den Betriebsgrößen in Schritt 200 wenigstens einem der hinterlegten Fahrerprofile entspricht, kann im einfachsten Fall das Verfahren beendet werden.

Alternativ kann jedoch in einem weiteren Schritt 270 eine positive Informatiuon an das System gesendet werden, um z.B. zusätzliche Funktionen des Fahrrads freizuschalten oder zuzuschalten. Denkbar sind hier beispielsweise nutzerspezifische Unterstützungsmodi, nutzerindividuelle Anzeigen, z.B. der gefahrenen Kilometer, nutzerspezifische Sprachwahl oder das Skinning von Anzeigeinstrumenten.

Optional können auch in einem weiteren Schritt 280 individuelle bevorzugte Einstellungen an den Komponenten des Fahrrads vorgenommen werden. Dabei könnte die Sattelposition, die Lenkereinstellung, die Einstellung der Dämpferelemente oder auch die Lampenausrichtung automatisch an den erkannten Fahrer angepasst werden.

In einem weiteren Ausführungsbeispiel wird im Schritt 200 nicht nur eine Betriebsgröße sondern auch gleich ein biometrischer Parameter erfasst, der in Schritt 230 zur Identifikation herangezogen wird. Denkbar ist hierbei beispielsweise, dass dem Sattel ein Drucksensor oder ein Dehnungsmessstreifen zugeordnet ist, der das Gewicht des Fahrers oder die Gewichtsverteilung auf dem Sattel erfasst.

## Patentansprüche

1. Verfahren zur Identifikation eines Fahrers eines Zweirads, wobei zur Identifikation die Schritte
• Erfassung (200) wenigstens einer Betriebsgröße des Zweirads, welche den Tritt des Fahrers in Form des durch den Fahrer erzeugten Drehmoments und/oder Drehgeschwindigkeit der Pedalen repräsentiert, und
• Durchführung einer Identifikation (230) des Fahrers in Abhängigkeit von
∘ dem zeitlichen Verhalten der wenigstens einen Betriebsgröße und
∘ dem Fahrer zugeordneten Vergleichsdaten, und
• Ausgabe eines insbesondere positiven oder negativen Identifikationssignals in Abhängigkeit von der Identifikation
vorgesehen sind.

2. Verfahren nach Anspruch 1, **dadurch gekennzeichnet, dass** in einem weiteren Schritt (200, 240) eine Fahrergröße erfasst wird, die einen persönlichen Parameter des Fahrers repräsentiert, wobei die Identifikation zusätzlich in Abhängigkeit der erfassten Fahrergröße erfolgt.

3. Verfahren nach Anspruch 2, **dadurch gekennzeichnet, dass** als Fahrergröße die Herzfrequenz, das Gewicht und/oder andere biometrische Parameter des Fahrers erfasst werden.

4. Verfahren nach einem der vorhergehenden Ansprüche, **dadurch gekennzeichnet, dass** als weitere Betriebsgröße
• ein Drehmoment eines Motors, und/oder
• eine Beschleunigung, insbesondere einer Tretkurbel eines Fahrrads oder des Zweirads, und/oder
• eine Drehfrequenz, insbesondere eines Motors, und/oder
• eine Trittfrequenz einer Tretkurbel eines Fahrrads, und/oder
• eine Neigung des Zweirads, und/oder
• eine Steigung des Zweirads während des Betriebs erfasst und zur Identifikation des Fahrers verwendet wird.

5. Verfahren nach einem der vorhergehenden Ansprüche, **dadurch gekennzeichnet, dass** GPS-Signale während des Betriebs des Zweirads erfasst werden und die Identifikation zusätzlich in Abhängigkeit der insbesondere zeitlichen Veränderung der GPS-Signale erfolgt.

6. Verfahren nach einem der vorhergehenden Ansprüche, **dadurch gekennzeichnet, dass** in Abhängigkeit von der insbesondere positiven oder negativen Identifikation des Fahrers eine Komponente (170, 180, 190) des Zweirads aktiviert und/oder deaktiviert wird, wobei insbesondere vorgesehen ist, dass der Antrieb (170) und/oder ein Bedienungselement (180) des Antriebs aktiviert und/oder blockiert wird.

7. Vorrichtung (100) zur Identifikation eines Fahrers eines Zweirads, wobei die Vorrichtung (100) wenigstens
• eine Auswerteeinheit (110), insbesondere zur Durchführung eines Verfahrens nach einem der Ansprüche 1 bis 6, und
• einen Speicher (160) zur Speicherung von dem Fahrer zugeordneten Vergleichsdaten aufweist,
wobei die Auswerteeinheit (110)
• wenigstens eine Betriebsgröße eines Zweirads erfasst, welche den Tritt des Fahrers in Form des durch den Fahrer erzeugten Drehmoments und/oder Drehgeschwindigkeit der Pedalen repräsentiert, und
• in Abhängigkeit vom zeitlicher Verlauf der Betriebsgröße und den Vergleichsdaten ein Identifikationssignal erzeugt.

8. Vorrichtung (100) nach Anspruch 7, **dadurch gekennzeichnet, dass** die Auswerteeinheit (110) eine Fahrergröße erfasst, die einen persönlichen Parameter des Fahrers repräsentiert, wobei das Identifikationssignal in Abhängigkeit der Fahrergröße erfolgt, wobei insbesondere vorgesehen ist, dass die Auswerteeinheit (110) mittels wenigstens eines entsprechenden Sensors biometrische Parameter des Fahrers erfasst.

9. Vorrichtung (100) nach Anspruch 7 oder 8, **dadurch gekennzeichnet, dass** die Auswerteeinheit (110) mittels wenigstens eines Sensors (120, 130, 140)
• ein Drehmomentgröße, welche das Drehmoment eines Motors repräsentiert, und/oder
• eine Beschleunigungsgröße, welche insbesondere die Beschleunigung einer Tretkurbel eines Fahrrads oder des Zweirads repräsentiert, und/oder
• eine Drehfrequenzgröße, welche insbesondere die Drehfrequenz eines Motors repräsentiert, und/oder
• eine Trittfrequenzgröße einer Tretkurbel eines Fahrrads, und/oder
• eine Neigungsgröße des Zweirads, und/oder
• eine Steigungsgröße des Zweirads während des Betriebs erfasst, wobei das Identifikationssignal in Abhängigkeit der wenigstens einen Größe erzeugt wird.

10. Vorrichtung (100) nach einem der Ansprüche 7 bis 9, **dadurch gekennzeichnet, dass** die Auswerteeinheit (110) während des Betriebs des Zweirads GPS-Signale empfängt oder erzeugt, wobei das Identifikationssignal in Abhängigkeit von den GPS-Signalen erzeugt wird.

11. Vorrichtung (100) nach einem der Ansprüche 7 bis 10, **dadurch gekennzeichnet, dass** die Auswerteeinheit (110) in Abhängigkeit von der Identifikation eine Komponente (170, 180, 190) des Zweirads aktiviert oder deren Steuerung bzw. Regelung freigibt, insbesondere den Betrieb eines Antriebs (170) und/oder eines Bedienelements (180).

12. Vorrichtung (100) nach einem der Ansprüche 7 bis 10, **dadurch gekennzeichnet, dass** die Auswerteeinheit (110) in Abhängigkeit von der fehlenden Identifikation eine Komponente (170, 180, 190) des Zweirads deaktiviert oder deren Steuerung bzw. Regelung blockiert, insbesondere den Betrieb eines Antriebs (170) und/oder eines Bedienelements (180).

## Claims

1. Method for identifying a rider of a two-wheeled vehicle, comprising the identifying steps of:
• acquiring (200) at least one operating variable of the two-wheeled vehicle that represents the pedaling of the rider in the form of the torque and/or rotational speed of the pedals generated by the rider, and
• carrying out an identification (230) of the rider in dependence on
° the temporal behaviour of the at least one operating variable and
° comparison data assigned to the rider, and
• outputting an identification signal, in particular a positive or negative identification signal, in dependence on the identification.

2. Method according to Claim 1, **characterized in that**, in a further step (200, 240), a rider variable that represents a personal parameter of the rider is acquired, the identification additionally taking place in dependence on the rider variable acquired.

3. Method according to Claim 2, **characterized in that** the heart rate, the weight and/or other biometric parameters of the rider are acquired as the rider variable.

4. Method according to one of the preceding claims, **characterized in that**
• a torque of a motor, and/or
• an acceleration, in particular of a pedal crank of a bicycle or of the two-wheeled vehicle, and/or
• a rotational frequency, in particular of a motor, and/or
• a pedaling frequency of a pedal crank of a bicycle, and/or
• an inclination of the two-wheeled vehicle, and/or
• an ascending gradient of the two-wheeled vehicle during operation
is acquired as a further operating variable and used for identifying the rider.

5. Method according to one of the preceding claims, **characterized in that** GPS signals are acquired during the operation of the two-wheeled vehicle and the identification additionally takes place in dependence on the changing of the GPS signals, in particular over time.

6. Method according to one of the preceding claims, **characterized in that**, in dependence on the identification of the rider, in particular a positive or negative identification, a component (170, 180, 190) of the two-wheeled vehicle is activated and/or deactivated, it being provided in particular that the drive (170) and/or an operating element (180) of the drive is activated and/or blocked.

7. Device (100) for identifying a rider of a two-wheeled vehicle, the device (100) comprising at least:
• an evaluation unit (110), in particular for carrying out a method according to one of Claims 1 to 6, and
• a memory (160) for storing comparison data assigned to the rider,
the evaluation unit (110)
• acquiring at least one operating variable of a two-wheeled vehicle that represents the pedaling of the rider in the form of the torque and/or rotational speed of the pedals generated by the rider, and
• in dependence on the variation over time of the operating variable and the comparison data, generates an identification signal.

8. Device (100) according to Claim 7, **characterized in that** the evaluation unit (110) acquires a rider variable that represents a personal parameter of the rider, the identification signal taking place in dependence on the rider variable, it being provided in particular that the evaluation unit (110) acquires biometric parameters of the rider by means of at least one corresponding sensor.

9. Device (100) according to Claim 7 or 8, **characterized in that** the evaluation unit (110) acquires by means of at least one sensor (120, 130, 140)
• a torque variable, which represents the torque of a motor, and/or
• an acceleration variable, which represents in particular the acceleration of a pedal crank of a bicycle or of the two-wheeled vehicle, and/or
• a rotational frequency variable, which represents in particular the rotational frequency of a motor, and/or
• a pedaling frequency variable of a pedal crank of a bicycle, and/or
• an inclination variable of the two-wheeled vehicle, and/or
• an ascending gradient variable of two-wheeled vehicle during operation,
the identification signal being generated in dependence on the at least one variable.

10. Device (100) according to one of Claims 7 to 9, **characterized in that** the evaluation unit (110) receives or generates GPS signals during the operation of the two-wheeled vehicle, the identification signal being generated in dependence on the GPS signals.

11. Device (100) according to one of Claims 7 to 10, **characterized in that**, in dependence on the identification, the evaluation unit (110) activates a component (170, 180, 190) of the two-wheeled vehicle or enables the open-loop or closed-loop control thereof, in particular the operation of a drive (170) and/or of an operating element (180).

12. Device (100) according to one of Claims 7 to 10, **characterized in that**, in dependence on the absent identification, the evaluation unit (110) deactivates a component (170, 180, 190) of the two-wheeled vehicle or disables the open-loop or closed-loop control thereof, in particular the operation of a drive (170) and/or of an operating element (180).

## Revendications

1. Procédé d'identification d'un conducteur d'un véhicule à deux roues, les étapes suivantes étant prévues pour l'identification
* acquisition (200) d'au moins une grandeur opérationnelle du véhicule à deux roues, laquelle représente le pédalage du conducteur sous la forme du couple et/ou de la vitesse de rotation des pédales générés par le conducteur, et
* exécution d'une identification (230) du conducteur en fonction
∘ du comportement dans le temps de l'au moins une grandeur opérationnelle et
∘ des données comparatives associées au conducteur, et
* délivrance d'un signal d'identification notamment positif ou négatif en fonction de l'identification.

2. Procédé selon la revendication 1, **caractérisé en ce que** dans une étape supplémentaire (200, 240) est acquise une grandeur de conducteur qui représente un paramètre personnel du conducteur, l'identification étant effectuée en plus en fonction de la grandeur de conducteur acquise.

3. Procédé selon la revendication 2, **caractérisé en ce que** la grandeur de conducteur acquise est la fréquence cardiaque, le poids et/ou d'autres paramètres biométriques du conducteur.

4. Procédé selon l'une des revendications précédentes, **caractérisé en ce que**
* un couple d'un moteur et/ou
* une accélération, notamment d'un pédalier d'une bicyclette ou du véhicule à deux roues, et/ou
* une fréquence de rotation, notamment d'un moteur, et/ou
* une fréquence de pédalage d'un pédalier d'une bicyclette, et/ou
* une inclinaison du véhicule à deux roues, et/ou
* une pente de montée du véhicule à deux roues sont acquis en tant que grandeurs opérationnelles pendant le fonctionnement et utilisés pour l'identification du conducteur.

5. Procédé selon l'une des revendications précédentes, **caractérisé en ce que** des signaux GPS sont acquis pendant le fonctionnement du véhicule à deux roues et l'identification est en plus effectuée en fonction de la variation, notamment dans le temps, des signaux GPS.

6. Procédé selon l'une des revendications précédentes, **caractérisé en ce qu'**un composant (170, 180, 190) du véhicule à deux roues est activé et/ou désactivé en fonction de l'identification notamment positive ou négative du conducteur, en prévoyant notamment que le mécanisme propulseur (170) et/ou un élément de commande (180) du mécanisme propulseur soit activé et/ou bloqué.

7. Dispositif (100) d'identification d'un conducteur d'un véhicule à deux roues, le dispositif (100) possédant au moins
* une unité d'interprétation (110), notamment destinée à mettre en oeuvre un procédé selon l'une des revendications 1 à 6, et
* une mémoire (160) destinée à enregistrer des données comparatives associées au conducteur l'unité d'interprétation (110)
* acquérant au moins une grandeur opérationnelle d'un véhicule à deux roues, laquelle représente le pédalage du conducteur sous la forme du couple et/ou de la vitesse de rotation des pédales générés par le conducteur, et
* générant un signal d'identification en fonction du comportement dans le temps de la grandeur opérationnelle et des données comparatives.

8. Dispositif (100) selon la revendication 7, **caractérisé en ce que** l'unité d'interprétation (110) acquiert une grandeur de conducteur qui représente un paramètre personnel du conducteur, le signal d'identification étant généré en fonction de la grandeur de conducteur, l'unité d'interprétation (110) étant notamment conçue pour acquérir des paramètres biométriques du conducteur au moyen d'au moins un capteur correspondant.

9. Dispositif (100) selon la revendication 7 ou 8, **caractérisé en ce que** l'unité d'interprétation (110) acquiert, au moyen d'au moins un capteur (120, 130, 140),
* une grandeur de couple, qui représente le couple d'un moteur et/ou
* une grandeur d'accélération, qui représente notamment l'accélération d'un pédalier d'une bicyclette ou du véhicule à deux roues, et/ou
* une grandeur de fréquence de rotation, qui représente notamment la fréquence de rotation d'un moteur, et/ou
* une grandeur de fréquence de pédalage d'un pédalier d'une bicyclette, et/ou
* une grandeur d'inclinaison du véhicule à deux roues, et/ou
* une grandeur de pente de montée du véhicule à deux roues pendant le fonctionnement, le signal d'identification étant généré en fonction de l'au moins une grandeur.

10. Dispositif (100) selon l'une des revendications 7 à 9, **caractérisé en ce que** l'unité d'interprétation (110) reçoit ou génère des signaux GPS pendant le fonctionnement du véhicule à deux roues, le signal d'identification étant généré en fonction des signaux GPS.

11. Dispositif (100) selon l'une des revendications 7 à 10, **caractérisé en ce que** l'unité d'interprétation (110) active un composant (170, 180, 190) du véhicule à deux roues en fonction de l'identification, ou alors libère sa commande ou sa régulation, notamment le fonctionnement d'un mécanisme propulseur (170) et/ou d'un élément de commande (180).

12. Dispositif (100) selon l'une des revendications 7 à 10, **caractérisé en ce que** l'unité d'interprétation (110) désactive un composant (170, 180, 190) du véhicule à deux roues en fonction de l'absence d'identification, ou alors bloque sa commande ou sa régulation, notamment le fonctionnement d'un mécanisme propulseur (170) et/ou d'un élément de commande (180).
